# EUROPEAN PATENT APPLICATION

(11) **EP 4 768 749 A1**
(43) Date of publication of application: **01.07.2026**
(21) Application number: 24855632.6
(22) Date of filing: 12.08.2024
(51) Int. Cl.: F16F 9/34, F16K 31/06, F16K 47/00

(54) **RELIEF VALVE FOR SHOCK ABSORBER, AND SHOCK ABSORBER**

(30) Priority: 24.08.2023 CN 202311078161
(71) Applicant: United Automotive Electronic Systems Co., Ltd., Pudong New Area Shanghai 201206 (CN)
(72) Inventor: XIA, Folin, Shanghai 201206 (CN); GAO, Cheng, Shanghai 201206 (CN); JIANG, Minghui, Shanghai 201206 (CN); LIN, Shuyong, Shanghai 201206 (CN); ZHANG, Benxiang, Shanghai 201206 (CN)
(74) Representative: 2K Patent Partnerschaft mbB
(86) International application number: PCT/CN2024/111337
(87) International publication number: WO 2025/039906

(57) **Abstract**

An overflow valve for a shock absorber includes a valve body, a hydraulic assembly disposed in the valve body, and an electromagnetic assembly. The hydraulic assembly includes a valve sleeve provided with a main valve cavity and an auxiliary valve cavity; a valve core located in the auxiliary valve cavity; a first elastic element located between the valve sleeve and the valve core; and a second elastic element connected to the valve core. An output end of the electromagnetic assembly abuts against the second elastic element. The present invention can improve the sealing performance of the overflow valve, reduce the assembly requirements of parts, and improve the product economy.

## Description

### TECHNICAL FIELD

The present application relates to the technical field of automobiles, in particular to an overflow valve for a shock absorber and a shock absorber.

### BACKGROUND

An overflow valve is a hydraulic pressure control valve, which mainly plays a role of constant pressure overflow, pressure stabilization, system unloading and safety protection, and can be applied to an active shock absorber of an automobile. The active shock absorber can form a hydraulic cylinder with a controllable damping function through the overflow valve, so that the automobiles can adapt to various road conditions. In the prior art, the valve port of the overflow valve is formed by the valve seat and the leaf spring, and this structure has a high requirement for the perpendicularity of the assembly of parts, which increases the assembly cost. In addition, during the operation of the overflow valve, the push rod pushes the valve core to move, and the valve core first overcomes the spring force and then overcomes the leaf spring force when approaching the valve port. Therefore, the consistency of the resultant force on the valve core is poor, and the pressure control accuracy of the overflow valve is poor.

### SUMMARY

In view of the above disadvantages, an object of the present invention is to provide an overflow valve for a shock absorber and a shock absorber, so as to solve the problems of high assembly requirements and poor pressure control accuracy of the overflow valve in the prior art.

In order to achieve the above object and other related objects, the present invention provides an overflow valve for a shock absorber, the overflow valve includes a valve body, a hydraulic assembly and an electromagnetic assembly.

The hydraulic assembly is disposed in the valve body and includes a valve sleeve, a valve core, a first elastic element and a second elastic element.

The valve sleeve is provided with a main valve cavity and an auxiliary valve cavity.

The valve core is located in the auxiliary valve cavity.

The first elastic element is located between the valve sleeve and the valve core.

The second elastic element is connected to the valve core.

The electromagnetic assembly has an output end abutting against the second elastic element.

In an embodiment of the present invention, the valve sleeve is provided with an oil passage hole, and the oil passage hole connects the main valve cavity and the auxiliary valve cavity.

In an embodiment of the present invention, the auxiliary valve cavity is provided with a first valve sleeve end surface, and the electromagnetic assembly pushes the second elastic element to drive the valve core to move toward the first valve sleeve end surface.

In an embodiment of the present invention, the valve core is provided with a pilot cavity, the pilot cavity penetrates through the valve core, a cavity port of the pilot cavity is located on a side away from the first valve sleeve end surface, and a cavity bottom of the pilot cavity is located on a side close to the first valve sleeve end surface.

In an embodiment of the present invention, the second elastic element is located on an end of the cavity port of the valve core, a gap exists between the second elastic element and the end of the cavity port to form a valve port, and after the electromagnetic assembly pushes the valve core to contact the first valve sleeve end surface, the electromagnetic assembly continues to push the second elastic element to deform so as to close the valve port.

In an embodiment of the present invention, a cross-sectional area of the cavity port is greater than a cross-sectional area of the cavity bottom.

In an embodiment of the present invention, an annular groove is provided on a radially outer side of the first valve sleeve end surface to define a second valve sleeve end surface, and one end of the first elastic element abuts against the second valve sleeve end surface.

In an embodiment of the present invention, an annular groove is provided on a side of the valve core close to the first valve sleeve end surface to define a first valve core end surface, and the other end of the first elastic element abuts against the first valve core end surface.

In an embodiment of the present invention, the hydraulic assembly further includes a fixing sleeve, the fixing sleeve is in interference fit with the valve core, and the second elastic element is located between the fixing sleeve and the valve core.

The present invention further provides a shock absorber, the shock absorber includes the overflow valve for the shock absorber according to any one of the above.

As described above, the overflow valve for the shock absorber and the shock absorber of the present invention have the following beneficial effects: the present invention can improve the sealing performance of the overflow valve, and at the same time, the present invention can reduce the assembly process of parts, reduce the assembly requirements of parts, and improve the product economy.

### BRIEF DESCRIPTION OF THE DRAWINGS

FIG. 1 shows a sectional view of an overflow valve for a shock absorber of the present invention.
FIG. 2 is a perspective view of a valve sleeve according to an embodiment of the present invention.
FIG. 3 is a cross-sectional view of a valve core according to an embodiment of the present invention.
FIG. 4 is a schematic diagram of a connection between a second elastic element and a valve core according to an embodiment of the present invention.
FIG. 5 is another schematic view showing the connection between the second elastic element and the valve core according to an embodiment of the present invention.
FIG. 6 is yet another schematic view showing the connection between the second elastic element and the valve core according to an embodiment of the present invention.

### PART NUMBER DESCRIPTION

100 valve sleeve; 110 main valve cavity; 111 oil hole; 120 auxiliary valve cavity; 121 first valve sleeve end surface; 122 second valve sleeve end surface; 130 oil passage hole;
200 valve core; 210 pilot cavity; 211 cavity port; 212 cavity bottom; 220 first valve core end surface; 230 second valve core end surface; 240 third valve core end surface;
300 first elastic element;
400 second elastic element; 401 riveting point; 402 through groove;
500 electromagnetic push rod;
600 fixing sleeve.

### DETAILED DESCRIPTION

The embodiments of the present invention are described below through specific examples, and those skilled in the art can easily understand other advantages and effects of the present invention from the content disclosed in this specification. The present invention may also be implemented or applied through other different specific embodiments, and various details in the specification may also be modified or changed based on different viewpoints and applications without departing from the present invention. It should be noted that the following embodiments and features in the embodiments may be combined with each other without conflict. It is also to be understood that the terminology used in the embodiments of the present invention is for the purpose of describing specific embodiments and is not intended to limit the scope of the present invention. The test methods without specific conditions in the following examples are generally in accordance with conventional conditions or in accordance with conditions recommended by various manufacturers.

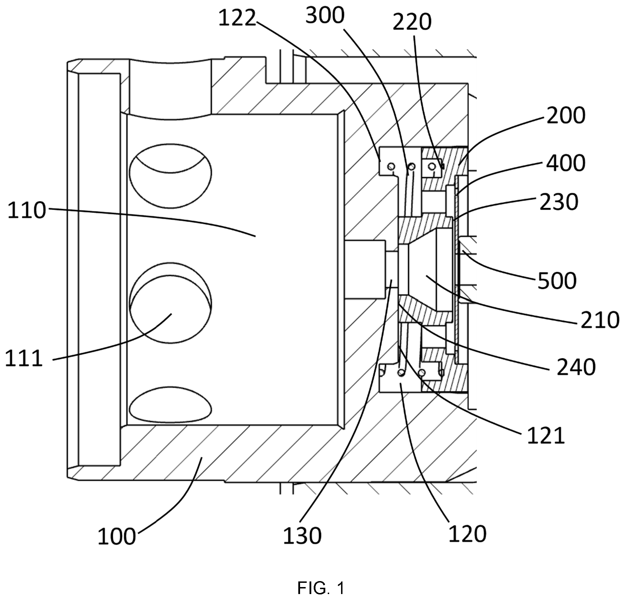

Please refer to FIG. 1 to FIG. 6. It should be noted that the structures, proportions, sizes and the like illustrated in the drawings of the specification are only used to cooperate with the content disclosed in the specification for those skilled in the art to understand and read, and are not used to limit the limitation conditions that can be implemented by the present invention, so there is no technical substantive meaning, any modification of the structures, change of the proportional relationship or adjustment of the sizes should still fall within the scope covered by the technical content disclosed in the present invention without affecting the effects and objectives that can be achieved by the present invention. At the same time, the terms such as "upper", "lower", "left", "right", "middle" and "one" cited in this specification are only for the convenience of description, and are not intended to limit the scope of implementation of the present invention, and the change or adjustment of the relative relationship is considered to be within the scope of implementation of the present invention without substantial change of technical content.

Referring to FIG. 1 to FIG. 6, the present invention provides an overflow valve for a shock absorber and a shock absorber, which can be applied to the technical field of automobiles, and specifically can be applied to an automobile damping system. The present invention can ensure component assembly perpendicularity, reduce component assembly requirements, and improve product economy. The following provides detailed descriptions by using specific embodiments.

Referring to FIG. 1, FIG. 1 is a sectional view of an overflow valve for a shock absorber of the present invention. In an embodiment of the present invention, the overflow valve for the shock absorber may include a valve body, an electromagnetic assembly, and a hydraulic assembly. The hydraulic assembly may be disposed in the valve body, and an output end of the electromagnetic assembly may abut against the hydraulic assembly. In this embodiment, a magnitude of an electromagnetic force generated by the electromagnetic assembly may be controlled, thereby proportionally controlling a magnitude of a hydraulic pressure of the overflow valve.

Referring to FIG. 1, in an embodiment of the present invention, the hydraulic assembly may include a valve sleeve 100, a valve core 200, a first elastic element 300, and a second elastic element 400. The valve sleeve 100 may be provided with a main valve cavity 110 and an auxiliary valve cavity 120. The valve core 200 may be located in the auxiliary valve cavity 120, and the valve core 200 may be provided with a pilot cavity 210. The outer circular surface of the valve core 200 and the inner circular surface of the auxiliary valve cavity 120 may be in clearance fit. The first elastic element 300 may be located between the valve sleeve 100 and the valve core 200. The first elastic element 300 may be a cylindrical coil spring. The second elastic element 400 may be connected to the valve core 200. The second elastic element 400 may be a circular leaf spring. The second elastic element 400 is located at one end of the pilot cavity 210 to form a valve port; the other end of the pilot cavity 210 may face the oil passage hole 130. The output end of the electromagnetic assembly may be an electromagnetic push rod 500, the electromagnetic push rod 500 abuts against the second elastic element 400, and the electromagnetic push rod 500 may push the second elastic element 400 and drive the valve core 200 to move axially.

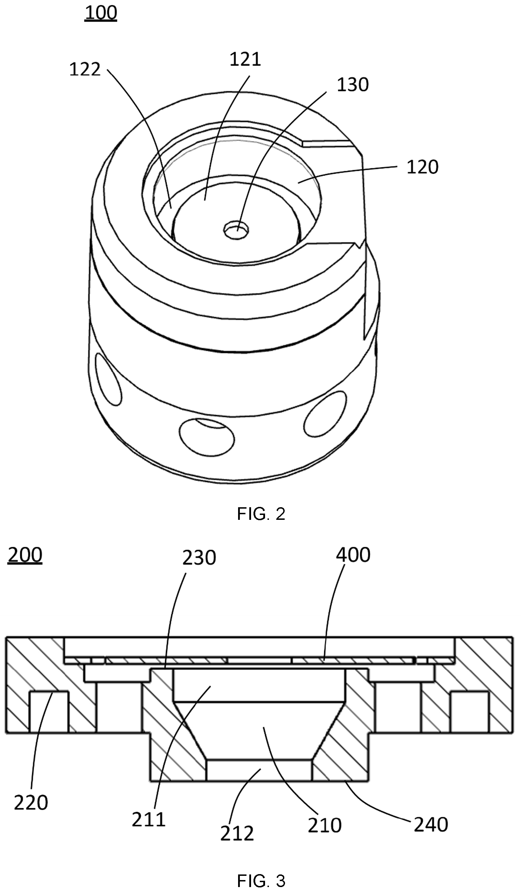

Referring to FIG. 2, FIG. 2 is a perspective view of a valve sleeve 100 according to an embodiment of the present invention. In an embodiment of the present invention, the valve sleeve 100 may be a rotary structure, and both the main valve cavity 110 and the auxiliary valve cavity 120 may be cylindrical cavities. An axis of the main valve cavity 110 and an axis of the auxiliary valve cavity 120 may be located on the same straight line. In this embodiment, a side wall of the main valve cavity 110 may be uniformly provided with a plurality of oil holes 111, and high-pressure oil may enter the main valve cavity 110 through the oil holes 111. The valve sleeve 100 is further provided with an oil passage hole 130, and there may be one or more oil passage holes 130. The oil passage hole 130 may communicate with the main valve cavity 110 and the auxiliary valve cavity 120, and the oil in the main valve cavity 110 may enter the auxiliary valve cavity 120 through the oil passage hole 130.

Referring to FIGS. 1 and 2, in an embodiment of the present invention, the auxiliary valve cavity 120 is provided with a first valve sleeve end surface 121. The first valve sleeve end surface 121 may be a circular end surface, and a center of the circular end surface may be located on the axis of the auxiliary valve cavity 120. Ports of the plurality of oil passage holes 130 may be located in the first valve sleeve end surface 121, and the plurality of oil passage holes 130 may be symmetrically distributed about the center of the first valve sleeve end surface 121. An annular groove may be provided on the radially outer side of the first valve sleeve end surface 121, thereby forming a second valve sleeve end surface 122. One end of the first elastic element 300 may abut against the second valve sleeve end surface 122. It can be seen that the second valve sleeve end surface 122 and the annular groove can limit one end of the first elastic element 300 axially and radially.

Referring to FIG. 3, FIG. 3 is a cross-sectional view of a valve core 200 according to an embodiment of the present invention. In an embodiment of the present invention, a side of the valve core 200 close to the first valve sleeve end surface 121 may be provided with another annular groove, so that the first valve core end surface 220 may be formed. In this embodiment, the position of the first valve core end surface 220 may correspond to the position of the first valve sleeve end surface 121, and the other end of the first elastic element 300 may abut against the first valve core end surface 220. It can be seen that the first valve core end surface 220 and the another annular groove can limit the other end of the first elastic element 300 axially and radially.

Referring to FIG. 3, in an embodiment of the present invention, the pilot cavity 210 may penetrate the valve core 200, the cavity port 211 of the pilot cavity 210 may be located on a side away from the first valve sleeve end surface 121, and the cavity bottom 212 of the pilot cavity 210 may be located on a side close to the first valve sleeve end surface 121. The second elastic element 400 may be located at an end of the cavity port 211 to define a valve port. In this embodiment, along the radial direction of the pilot cavity 210, a cross-sectional area of the cavity port 211 is greater than an cross-sectional area of the cavity bottom 212, that is, the pilot cavity 210 is funnel-shaped, and the diameter of the pilot cavity 210 gradually shrinks from the cavity port 211 to the cavity bottom 212. It can be seen that in the working process of the hydraulic assembly of the present invention, when a pressure impact occurs, the high-pressure oil flowing into the pilot cavity 210 can exert an axial force on the valve core 200, thereby pressing the valve core 200 against the first valve sleeve end surface 121. The above structural avoids additional leakage, thereby improving the stability of the valve.

Referring to FIG. 3, in an embodiment of the present invention, an outer end of the cavity port 211 may be a second valve core end surface 230 of the valve core 200, and an outer end of the cavity bottom 212 may be a third valve core end surface 240 of the valve core 200. A gap exists between the cavity port 211 and the second elastic element 400, that is, a gap may exist between the second valve core end surface 230 and the second elastic element 400, and the gap is used to form a valve port. In this embodiment, the electromagnetic push rod 500 pushes the second elastic element 400, and the second elastic element 400 drives the valve core 200 to move toward the first valve sleeve end surface 121. When the end of the cavity bottom 212 is in contact with the first valve sleeve end surface 121, that is, when the third valve core end surface 240 is in contact with the first valve sleeve end surface 121, the electromagnetic push rod 500 continues to push and compress the second elastic element 400, so that the second elastic element 400 deforms and is in contact with the end of the cavity port 211, that is, the deformed second elastic element 400 is in contact with the second valve core end surface 230, thereby closing the valve port of the pilot cavity 210.

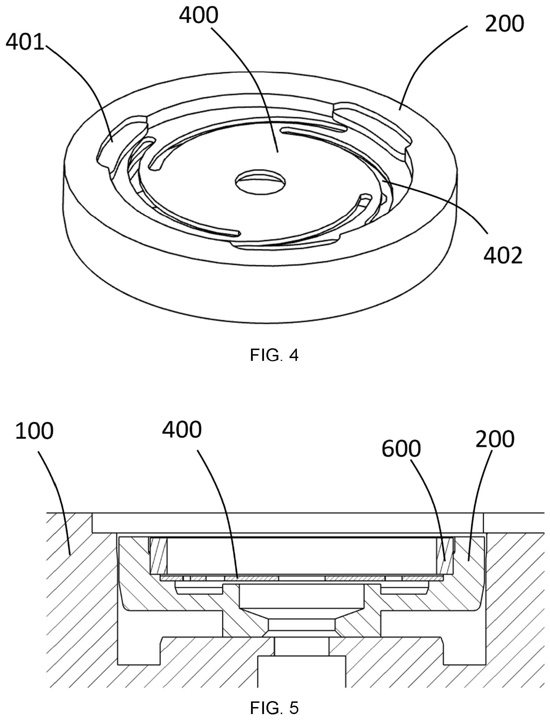

Referring to FIG. 4, FIG. 4 is a schematic diagram of the connection between the second elastic element 400 and the valve core 200 according to an embodiment of the present invention, and in an embodiment of the present invention, the second elastic element 400 and the valve core 200 may be connected by riveting. At the connection between the second elastic element 400 and the valve core 200, a plurality of riveting points 401 may be uniformly arranged in the circumferential direction to limit movement of the second elastic element 400 along an axial direction of the valve core 200. In this embodiment, the second elastic element 400 is provided with a plurality of through grooves 402, and the through grooves 402 can be used to adjust the rigidity of the second elastic element 400. When the electromagnetic push rod 500 acts on a center of the second elastic element 400, an edge portion of the second elastic element 400 remains stationary relative to the valve core 200, and a center portion of the second elastic element 400 deforms, thereby driving the valve core 200 to move in the axial direction and closing the valve port of the pilot cavity 210.

Referring to FIG. 5, FIG. 5 is another schematic connection diagram of the second elastic element 400 and the valve core 200 according to an embodiment of the present invention. In an embodiment of the present invention, the hydraulic assembly of the present invention further includes a fixing sleeve 600. The fixing sleeve 600 is in an interference fit with the valve core 200, and the fitting surfaces thereof may be an outer circular surface of the fixing sleeve 600 and an inner circular surface of the valve core 200. In this embodiment, the second elastic element 400 may be located between the end surface of the fixing sleeve 600 and the second valve core end surface 230 of the valve core 200. Thus, the fixing sleeve 600 can fix the second elastic element 400 on the valve core 200.

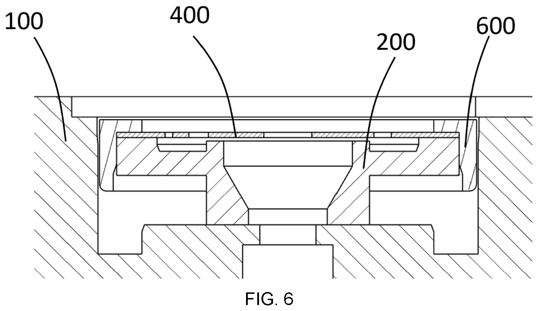

Referring to FIG. 6, FIG. 6 is another schematic connection diagram of the second elastic element 400 and the valve core 200 according to an embodiment of the present invention. In an embodiment of the present invention, the fixing sleeve 600 may be in an interference fit with the valve core 200, and the fitting surfaces thereof may be an inner circular surface of the fixing sleeve 600 and an outer circular surface of the valve core 200. In this embodiment, the outer circular surface of the fixing sleeve 600 may be in a clearance fit with the inner circular surface of the auxiliary valve cavity 120. An end of the fixing sleeve 600 close to the second valve core end surface 230 may be provided with a step, and the second elastic element 400 is located between the step and the second valve core end surface 230. Thus, the fixing sleeve 600 can fix the second elastic element 400 on the valve core 200.

In an embodiment of the present invention, the second elastic element 400 and the valve core 200 may also be connected by welding, interference fit, or the like, for example, the second elastic element 400 is directly welded to the valve core 200, and for another example, the second elastic element 400 directly forms interference fit with the inner circular surface of the valve core 200.

Referring to FIG. 1 to FIG. 3, in an embodiment of the present invention, when the hydraulic assembly of the present invention works, the electromagnetic push rod 500 first acts on the second elastic element 400, and then pushes the valve core 200 to overcome the spring force of the first elastic element 300, so as to press the valve core 200 against the first valve core end surface 220. The second elastic element 400 deforms under the continued thrust of the electromagnetic push rod 500, and then contacts the second valve core end surface 230, thereby closing the valve port of the pilot cavity 210. The oil may enter the pilot cavity 210 from the main valve cavity 110 through the oil passage hole. When the pressure of the oil can overcome the acting force of the electromagnetic push rod 500, the second elastic element 400 rebounds, the valve port of the pilot cavity 210 opens to overflow, the pressure of the pilot cavity 210 decreases, and after the second elastic element 400 is balanced, the valve port of the pilot cavity 210 can be stabilized and the pressure is kept constant.

It can be seen that during operation, the valve core 200 is pushed by the force of the electromagnetic push rod 500 until the valve core 200 contacts the first valve sleeve end surface 121, and the gap between the second elastic element 400 and the second valve core end surface 230 forms the valve port of the pilot cavity 210. The pressure controlled by the valve port is determined by only the acting force of the electromagnetic push rod 500 and the elastic force of the second elastic element 400, and the elastic force of the first elastic element 300 does not participate in pressure balance, so the magnitude of the oil pressure can be adjusted by adjusting the magnitude of the acting force of the electromagnetic push rod 500, thereby achieving proportional control of the oil pressure. The present invention can improve the consistency of the pressure control of the valve port and improve the accuracy of the product.

The present invention further provides a shock absorber, which may include the overflow valve for the shock absorber. According to the load, the shock absorber can use the overflow valve to adjust the pressure of the hydraulic system. Specifically, the shock absorber may use the overflow valve to adjust parameters such as resistance characteristics and amplitude stroke to adapt to various road conditions.

In summary, the present invention provides an overflow valve for a shock absorber and a shock absorber, and relates to the field of hydraulic technology. By incorporating the valve seat into the valve core and machining the two as a single piece, the components of hydraulic assembly of the overflow valve is reduced. The present invention can ensure component assembly perpendicularity, reduce component assembly processes, reduce component assembly requirements, and improve product economy. Therefore, the present invention effectively overcomes various disadvantages in the prior art and has high industrial utilization value.

The above embodiments are merely illustrative of the principles and effects of the present invention, and are not intended to limit the present invention. Any person skilled in the art can modify or change the above embodiments without departing from the scope of the present invention. Therefore, all equivalent modifications or changes made by those skilled in the art without departing from the technical ideas disclosed in the present invention should still be covered by the claims of the present invention.

In the description herein, numerous specific details are provided, such as examples of components and/or methods, to provide a thorough understanding of embodiments of the invention. One skilled in the relevant art will recognize, however, that an embodiment of the invention can be practiced without one or more of the specific details, or with other apparatus, systems, assemblies, methods, components, materials, parts, and/or the like. In other instances, well-known structures, materials, or operations are not specifically shown or described in detail to avoid obscuring aspects of embodiments of the invention.

The above description of illustrated embodiments of the invention, including what is described in the Abstract, is not intended to be exhaustive or to limit the invention to the precise forms disclosed herein. While specific embodiments of, and examples for, the invention are described herein for illustrative purposes only, various equivalent modifications are possible within the scope of the present invention, as those skilled in the relevant art will recognize and appreciate. As indicated, these modifications may be made to the present invention in light of the above description of the described embodiments of the present invention and are to be within the spirit and scope of the present invention.

## Claims

1. An overflow valve for a shock absorber, the overflow valve comprising:
a valve body;
a hydraulic assembly, disposed in the valve body, the hydraulic assembly comprising:
a valve sleeve, provided with a main valve cavity and an auxiliary valve cavity;
a valve core, located in the auxiliary valve cavity;
a first elastic element, located between the valve sleeve and the valve core; and
a second elastic element, connected to the valve core; and
an electromagnetic assembly having an output end abutting against the second elastic element.

2. The overflow valve for the shock absorber according to claim 1, wherein the valve sleeve is provided with an oil passage hole, and the oil passage hole connects the main valve cavity and the auxiliary valve cavity.

3. The overflow valve for the shock absorber according to claim 1, wherein the auxiliary valve cavity is provided with a first valve sleeve end surface, and the electromagnetic assembly is configured to push the second elastic element to drive the valve core to move toward the first valve sleeve end surface.

4. The overflow valve for the shock absorber according to claim 3, wherein the valve core is provided with a pilot cavity, the pilot cavity penetrates through the valve core, a cavity port of the pilot cavity is located on a side away from the first valve sleeve end surface, and a cavity bottom of the pilot cavity is located on a side close to the first valve sleeve end surface.

5. The overflow valve for the shock absorber according to claim 4, wherein the second elastic element is located on an end of the cavity port of the valve core, a gap exists between the second elastic element and the end of the cavity port to form a valve port, and after the electromagnetic assembly pushes the valve core to be in contact with the first valve sleeve end surface, the electromagnetic assembly continues to push to the second elastic element to deform so as to close the valve port.

6. The overflow valve for the shock absorber according to claim 4, wherein a cross-sectional area of the cavity port is greater than a cross-sectional area of the cavity bottom.

7. The overflow valve for the shock absorber according to claim 3, wherein an annular groove is provided on a radially outer side of the first valve sleeve end surface to define a second valve sleeve end surface, and one end of the first elastic element abuts against the second valve sleeve end surface.

8. The overflow valve for the shock absorber according to claim 7, wherein an annular groove is provided on a side of the valve core close to the first valve sleeve end surface to define a first valve core end surface, and the other end of the first elastic element abuts against the first valve core end surface.

9. The overflow valve for the shock absorber according to claim 1, wherein the hydraulic assembly further comprises a fixing sleeve, the fixing sleeve is in interference fit with the valve core, and the second elastic element is located between the fixing sleeve and the valve core.

10. A shock absorber comprising the overflow valve for the shock absorber according to any one of claims 1-9.
